# EUROPEAN PATENT APPLICATION

(11) **EP 4 132 174 A1**
(43) Date of publication of application: **08.02.2023**
(21) Application number: 21800485.1
(22) Date of filing: 22.04.2021
(51) Int. Cl.: H04W 72/04, H04W 72/12

(54) **UPLINK DATA TRANSMISSION METHOD AND APPARATUS**

(30) Priority: 08.05.2020 CN 202010385397
(71) Applicant: Huawei Technologies Co., Ltd., Shenzhen, Guangdong 518129 (CN)
(72) Inventor: ZHANG, Meng, Shenzhen, Guangdong 518129 (CN); WANG, Rui, Shenzhen, Guangdong 518129 (CN); LIU, Ye, Shenzhen, Guangdong 518129 (CN); ZHAO, Yang, Shenzhen, Guangdong 518129 (CN)
(74) Representative: Isarpatent
(86) International application number: PCT/CN2021/088854
(87) International publication number: WO 2021/223599

(57) **Abstract**

Embodiments of this application disclose an uplink data transmission method and apparatus. Specifically, user equipment reports an uplink mode supported by the user equipment to a network device by using a capability message, where the uplink mode is an uplink mode for a first carrier and a second carrier of the user equipment. The network device determines, based on the capability message, the uplink mode supported by the user equipment, generates a configuration message, and sends the configuration message to the user equipment. The configuration message includes an uplink mode configured by the network device. After receiving the configuration message, the user equipment transmits uplink data in the uplink mode in the configuration message. In this application, the uplink mode supported by the user equipment is predefined and reported to the network device, and then the network device can configure an available uplink mode for the user equipment, so that the user equipment can transmit data in different uplink modes, thereby increasing uplink data transmission efficiency.

## Description

This application claims priority to Chinese Patent Application No. 202010385397.6, filed on May 8, 2020, and entitled "UPLINK DATA TRANSMISSION METHOD AND APPARATUS", which is incorporated herein by reference in its entirety.

### TECHNICAL FIELD

This application relates to the field of communication technologies, and in particular, to an uplink data transmission method and an apparatus.

### BACKGROUND

In the 5G new radio (5^{th} generation new radio, 5G-NR) era, user equipment (user equipment, UE) has two complete sets of transmission resources to support a non-stand alone (non-stand alone, NSA) architecture, so that 2Tx uplink transmission may be implemented. 2Tx uplink transmission means that joint transmission is simultaneously performed on a same carrier by using two transmission links of the UE. Because the UE has two sets of transmission resources for uplink transmission, it is also possible for a base station to configure two different carriers for the UE for uplink transmission, thereby implementing dual transmissions in different frequency bands. The so-called dual transmissions in different frequency bands mean that the UE may perform transmission on two different uplink carriers. In the implementation solution, the UE respectively allocates the two sets of transmission resources to the two different carriers, to transmit uplink data.

As an uplink carrier switching technology is proposed, the UE is enabled to support an uplink mode of 2Tx uplink transmission and an uplink mode of dual transmissions in different frequency bands. To be specific, the UE may perform uplink transmission by switching one set of transmission resources between the two carriers and using two sets of transmission resources on one carrier. However, at present, the uplink carrier switching technology supports only an uplink mode in which two-Tx transmission is performed on one fixed carrier and one-Tx transmission is performed on the other fixed carrier, and cannot support more uplink modes.

### SUMMARY

Embodiments of this application provide an uplink data transmission method and an apparatus, to distinguish between different uplink modes and transmit uplink data based on a configured uplink mode when UE has a capability of performing two-Tx transmission on each of two carriers.

According to a first aspect of the embodiments of this application, an uplink data transmission method is provided. The method includes: A network device receives a capability message from user equipment, where the capability message is used to indicate an uplink mode supported by the user equipment, and the uplink mode is an uplink mode for a first carrier and a second carrier of the user equipment; and the network device sends a configuration message to the user equipment, where the configuration message includes the uplink mode. In this embodiment, when supporting a plurality of uplink modes, the user equipment may report the uplink mode supported by the user equipment to the network device by using the capability message. The uplink mode is the uplink mode for the first carrier and the second carrier of the user equipment. The network device determines, based on the capability message, the uplink mode supported by the user equipment, generates the configuration message, and sends the configuration message to the user equipment. After receiving the configuration message, the user equipment transmits uplink data in the uplink mode included in the configuration message. To be specific, the uplink mode supported by the user equipment is predefined and reported to the network device, and then the network device can configure an available uplink mode for the user equipment, so that the user equipment can perform switching between different uplink modes, thereby increasing uplink data transmission efficiency.

With reference to the first aspect, in a possible implementation, the uplink mode may include one or more of an uplink mode in which scheduling of two-Tx transmission is allowed on the first carrier and scheduling of one-Tx transmission is allowed on the second carrier, an uplink mode in which scheduling of one-Tx transmission is allowed on the first carrier and scheduling of two-Tx transmission is allowed on the second carrier, and an uplink mode in which scheduling of two-Tx transmission is allowed on both the first carrier and the second carrier.

With reference to the first aspect, in a possible implementation, the method further includes: The network device generates the configuration message based on the capability message. Specifically, after obtaining the capability message, the network device may determine, based on the capability message, the uplink mode supported by the user equipment, and then generate the configuration message based on the uplink mode supported by the user equipment. The configuration message is used to indicate the user equipment to transmit uplink data in the uplink mode included in the configuration message.

With reference to the first aspect, in a possible implementation, the method further includes: The network device determines, according to a preset rule, the uplink mode supported by the user equipment. Specifically, when the uplink mode supported by the user equipment is not reported by using the capability message, the network device may directly determine the uplink mode according to the preset rule, so that the uplink mode supported by the user equipment can be more comprehensively obtained. The preset rule is used to indicate that the first carrier or the second carrier is a carrier on which scheduling of two-Tx transmission is allowed.

With reference to the first aspect, in a possible implementation, that the network device determines, according to a preset rule, the uplink mode supported by the user equipment includes: The network device determines the uplink mode based on a target carrier corresponding to the preset rule, where the uplink mode is an uplink mode used to indicate that scheduling of two-Tx transmission is allowed on the target carrier and scheduling of one-Tx transmission is allowed on the other carrier, and the target carrier is the first carrier or the second carrier. In the implementation, the network device determines the target carrier corresponding to the preset rule as a carrier on which scheduling of two-Tx transmission is allowed, and the other carrier as a carrier on which scheduling of one-Tx transmission is allowed, thereby determining the uplink mode supported by the user equipment. When the target carrier is the first carrier, the uplink mode determined by the network device is that scheduling of two-Tx transmission is allowed on the first carrier and scheduling of one-Tx transmission is allowed on the second carrier. When the target carrier is the second carrier, the uplink mode determined by the network device is that scheduling of two-Tx transmission is allowed on the second carrier and scheduling of one-Tx transmission is allowed on the first carrier.

With reference to the first aspect, in a possible implementation, the target carrier may be a carrier with a high frequency, a carrier for time division duplexing, or a carrier reported by the user equipment.

With reference to the first aspect, in a possible implementation, when the uplink mode included in the configuration message is in an inactive state, the method further includes: The network device sends an activation message to the user equipment, where the activation message includes a to-be-activated uplink mode. The to-be-activated uplink mode is the uplink mode in the configuration message, and the activation message is used to indicate that the uplink mode is in an active state, so that the user equipment transmits uplink data in the uplink mode in an active state. In the implementation, when the uplink mode configured by the network device for the user equipment is in an inactive state, the network device may send the activation message to the user equipment, to activate the uplink mode configured by the network device. There may be one or more to-be-activated uplink modes in the activation message.

With reference to the first aspect, in a possible implementation, when at least two uplink modes are both in an active state, the method further includes: The network device sends a control message to the user equipment, where the control message includes a target uplink mode, and is used to indicate the user equipment to transmit uplink data in the target uplink mode. In the implementation, when at least two uplink modes are in an active state, the network device may indicate, by sending the control message, the user equipment to transmit uplink data in the target uplink mode.

With reference to the first aspect, in a possible implementation, the method further includes: The network device reserves a switching slot based on an uplink mode currently used by the user equipment and a switching time corresponding to the uplink mode. In the implementation, each of different uplink modes includes the first carrier and the second carrier. When the user equipment transmits uplink data in the uplink mode, switching between different carriers is performed. When the user equipment performs carrier switching, to ensure that the uplink data is not lost, the network device does not schedule, within the switching time, the user equipment to transmit uplink data. Specifically, the capability message sent by the user equipment may further include a switching time corresponding to each uplink mode, where the switching time represents a time period used by the user equipment to perform switching between the first carrier and the second carrier. The network device determines, based on the capability message, the switching time corresponding to each uplink mode, thereby ensuring that the user equipment is not scheduled within the switching time to transmit uplink data.

According to a second aspect of the embodiments of this application, an uplink data transmission method is provided. The method includes:

User equipment receives a configuration message from a network device, where the configuration message includes an uplink mode, and the uplink mode is an uplink mode for a first carrier and a second carrier of the user equipment; and the user equipment transmits uplink data in the uplink mode in the configuration message In the implementation, after reporting the uplink mode supported by the user equipment to the network device, the user equipment may receive the configuration message sent by the network device, where the configuration message includes the uplink mode. The user equipment may transmit uplink data in the uplink mode configured in the configuration message, so that the user equipment may transmit data by using different uplink modes, thereby increasing data transmission efficiency.

With reference to the second aspect, in a possible implementation, the uplink mode includes one or more of an uplink mode in which scheduling of two-Tx transmission is allowed on the first carrier and scheduling of one-Tx transmission is allowed on the second carrier, an uplink mode in which scheduling of one-Tx transmission is allowed on the first carrier and scheduling of two-Tx transmission is allowed on the second carrier, and an uplink mode in which scheduling of two-Tx transmission is allowed on both the first carrier and the second carrier.

With reference to the second aspect, in a possible implementation, the method further includes: The user equipment sends a capability message to the network device, where the capability message is used to indicate the uplink mode supported by the user equipment, and the uplink mode is an uplink mode for the first carrier and the second carrier of the user equipment.

With reference to the second aspect, in a possible implementation, when the uplink mode in the configuration message is in an inactive state, the user equipment transmits uplink data in the uplink mode in the configuration message includes: The user equipment receives an activation message from the network device, where the activation message includes a to-be-activated uplink mode. The to-be-activated uplink mode is the uplink mode in the configuration message, and the activation message is used to indicate that the uplink mode is in an active state; and the user equipment transmits uplink data in the uplink mode in an active state.

With reference to the second aspect, in a possible implementation, when at least two uplink modes are both in an active state, the user equipment transmits uplink data in the uplink mode in the configuration message includes: The user equipment receives a control message from the network device, where the control message includes a target uplink mode; and the user equipment transmits uplink data in the target uplink mode

With reference to the second aspect, in a possible implementation, the capability message includes a target carrier, and the target carrier is a carrier on which scheduling of two-Tx transmission is allowed.

With reference to the second aspect, in a possible implementation, the capability message includes a switching time corresponding to the uplink mode, and the switching time represents a time period used by the user equipment to perform switching between the first carrier and the second carrier.

According to a third aspect of the embodiments of this application, a communication apparatus is provided, including: a receiving module, configured to receive a capability message from user equipment, where the capability message is used to indicate an uplink mode supported by the user equipment, and the uplink mode is an uplink mode for a first carrier and a second carrier of the user equipment; and a sending module, configured to send a configuration message to the user equipment, where the configuration message includes the uplink mode.

With reference to the third aspect, in a possible implementation, the uplink mode includes one or more of an uplink mode in which scheduling of two-Tx transmission is allowed on the first carrier and scheduling of one-Tx transmission is allowed on the second carrier, an uplink mode in which scheduling of one-Tx transmission is allowed on the first carrier and scheduling of two-Tx transmission is allowed on the second carrier, and an uplink mode in which scheduling of two-Tx transmission is allowed on both the first carrier and the second carrier.

With reference to the third aspect, in a possible implementation, the apparatus further includes: a processing module, configured to determine, according to a preset rule, the uplink mode supported by the user equipment.

With reference to the third aspect, in a possible implementation, the processing module is specifically configured to determine the uplink mode based on a target carrier corresponding to the preset rule, where the uplink mode is an uplink mode used to indicate that scheduling of two-Tx transmission is allowed on the target carrier and scheduling of one-Tx transmission is allowed on the other carrier, and the target carrier is the first carrier or the second carrier.

With reference to the third aspect, in a possible implementation, the processing module is further configured to generate the configuration message based on the capability message.

With reference to the third aspect, in a possible implementation, the target carrier includes a carrier with a high frequency, a carrier for time division duplexing, or a carrier reported by the user equipment.

With reference to the third aspect, in a possible implementation, when the uplink mode in the configuration message is in an inactive state, the sending module is further configured to send an activation message to the user equipment, where the activation message includes a to-be-activated uplink mode, the to-be-activated uplink mode is the uplink mode in the configuration message, and the activation message is used to indicate that the uplink mode is in an active state, so that the user equipment transmits uplink data in the uplink mode in an active state.

With reference to the third aspect, in a possible implementation, when at least two uplink modes are both in an active state, the sending module is further configured to send a control message to the user equipment, where the control message includes a target uplink mode, and the control message is used to indicate the user equipment to transmit uplink data in the target uplink mode.

With reference to the third aspect, in a possible implementation, the processing module is further configured to reserve a switching slot based on an uplink mode currently used by the user equipment and a switching time corresponding to the uplink mode, where the switching time represents a time period used by the user equipment to perform switching between the first carrier and the second carrier.

According to a fourth aspect of the embodiments of this application, a communication apparatus is provided, including: a receiving module, configured to receive a configuration message from a network device, where the configuration message includes an uplink mode, and the uplink mode is an uplink mode for a first carrier and a second carrier of user equipment; and a sending module, configured to transmit uplink data in the uplink mode in the configuration message.

With reference to the fourth aspect, in a possible implementation, the uplink mode includes one or more of an uplink mode in which scheduling of two-Tx transmission is allowed on the first carrier and scheduling of one-Tx transmission is allowed on the second carrier, an uplink mode in which scheduling of one-Tx transmission is allowed on the first carrier and scheduling of two-Tx transmission is allowed on the second carrier, and an uplink mode in which scheduling of two-Tx transmission is allowed on both the first carrier and the second carrier.

With reference to the fourth aspect, in a possible implementation, the apparatus further includes: a processing module, configured to generate a capability message based on the uplink mode supported by the user equipment.

With reference to the fourth aspect, in a possible implementation, the sending module is further configured to send the capability message to the network device, where the capability message is used to indicate the uplink mode supported by the user equipment, and the uplink mode is an uplink mode for the first carrier and the second carrier of the user equipment.

With reference to the fourth aspect, in a possible implementation, when the uplink mode in the configuration message is in an inactive state, the receiving module is further configured to receive an activation message from the network device, where the activation message includes a to-be-activated uplink mode, the to-be-activated uplink mode is the uplink mode in the configuration message, and the activation message is used to indicate that the uplink mode is in an active state; and the sending module is specifically configured to transmit uplink data in the uplink mode in an active state.

With reference to the fourth aspect, in a possible implementation, when at least two uplink modes are both in an active state, the receiving module is further configured to receive a control message from the network device, where the control message includes a target uplink mode; and the sending module is specifically configured to transmit uplink data in the target uplink mode.

With reference to the fourth aspect, in a possible implementation, the capability message includes a target carrier, the target carrier is a carrier on which scheduling of two-Tx transmission is allowed, and the target carrier is the first carrier or the second carrier.

With reference to the fourth aspect, in a possible implementation, the capability message includes a switching time corresponding to the uplink mode, and the switching time represents a time period used by the user equipment to perform switching between the first carrier and the second carrier.

According to a fifth aspect of the embodiments of this application, a communication system is provided, including the communication apparatus according to the third aspect and the communication apparatus according to the fourth aspect.

According to a sixth aspect of the embodiments of this application, a communication apparatus is provided. The apparatus includes a processor and a memory, the processor is connected to the memory, and the memory is configured to store a computer program; and the processor is configured to execute the computer program in the memory, to perform the method according to the first aspect.

According to a seventh aspect of the embodiments of this application, a communication apparatus is provided. The apparatus includes a processor and a memory, the processor is connected to the memory, and the memory is configured to store a computer program; and the processor is configured to execute the computer program in the memory, to perform the method according to the second aspect.

According to an eighth aspect of the embodiments of this application, a computer-readable storage medium is provided. The computer-readable storage medium stores a computer program, and when the computer program is run, the method according to the first aspect is implemented.

According to a ninth aspect of the embodiments of this application, a computer-readable storage medium is provided. The computer-readable storage medium stores a computer program, and when the computer program is run, the method according to the second aspect is implemented.

Embodiments of this application provide an uplink data transmission method. Specifically, user equipment reports an uplink mode supported by the user equipment to a network device by using a capability message, where the uplink mode is an uplink mode for a first carrier and a second carrier of the user equipment. The network device determines, based on the capability message, the uplink mode supported by the user equipment, generates a configuration message, and sends the configuration message to the user equipment. The configuration message includes an uplink mode configured by the network device. After receiving the configuration message, the user equipment transmits uplink data in the uplink mode included in the configuration message. To be specific, the uplink mode supported by the user equipment is predefined and reported to the network device, and then the network device can configure an available uplink mode for the user equipment, so that the user equipment can perform switching between different uplink modes, thereby increasing uplink data transmission efficiency.

### BRIEF DESCRIPTION OF DRAWINGS

To describe technical solutions in the embodiments of this application or in the conventional technology more clearly, the following briefly introduces accompanying drawings used in describing the embodiments or the conventional technology. It is clear that the accompanying drawings in the following descriptions show some embodiments of this application, and a person of ordinary skill in the art may still derive other drawings from these accompanying drawings without creative efforts.
FIG. 1 is a schematic diagram of a structure of user equipment according to an embodiment of this application;
FIG. 2 is a schematic diagram of an application scenario according to an embodiment of this application;
FIG. 3 is a schematic diagram of another application scenario according to an embodiment of this application;
FIG. 4 is a schematic diagram of still another application scenario according to an embodiment of this application;
FIG. 5 is a schematic diagram of SUL-based uplink transmission according to an embodiment of this application;
FIG. 6 is a schematic diagram of EN-DC-based uplink transmission according to an embodiment of this application;
FIG. 7 is a schematic diagram of a structure of another user equipment according to an embodiment of this application;
FIG. 8 is a flowchart of an uplink data transmission method according to an embodiment of this application;
FIG. 9 is a flowchart of another uplink data transmission method according to an embodiment of this application;
FIG. 10 is a schematic diagram of a structure of a network device according to an embodiment of this application;
FIG. 11 is a schematic diagram of a structure of another network device according to an embodiment of this application;
FIG. 12 is a schematic diagram of a structure of user equipment according to an embodiment of this application;
FIG. 13 is a schematic diagram of a structure of another user equipment according to an embodiment of this application;
FIG. 14 is a schematic diagram of a structure of a communication apparatus according to an embodiment of this application;
FIG. 15 is a schematic diagram of a structure of another communication apparatus according to an embodiment of this application;
FIG. 16 is a schematic diagram of a structure of still another communication apparatus according to an embodiment of this application; and
FIG. 17 is a schematic diagram of a structure of yet another communication apparatus according to an embodiment of this application.

### DESCRIPTION OF EMBODIMENTS

To facilitate understanding of the technical solutions provided by the embodiments of this application, the following first describes technical terms used in the embodiments of this application.

2Tx uplink transmission (2Tx uplink transmission) means that data is simultaneously sent on a same uplink carrier by using two-Tx transmission links, and is mainly applied to technologies, such as uplink multi-input multi-output (uplink multi-input multi-output, UL MIMO), transmit diversity, and sending a sounding reference signal (sounding reference signal, SRS) through two ports in downlink MIMO enhancement. The UL MIMO means that a network device schedules user equipment to transmit different data packets on two sets of transmission links by using a same carrier. Transmit diversity means that the network device schedules the user equipment to transmit a same data packet on two sets of transmission links by using a same carrier, to enhance signal anti-interference. The sending an SRS through two ports in downlink MIMO enhancement means that the network device schedules the user equipment to send the SRS through a port corresponding to either of the two sets of transmission links, so that the network device determines channel quality of the transmission links based on the SRS sent by either of the ports corresponding to the transmission links.

Tx uplink transmission means that data is sent on only one transmission link by using an uplink carrier.

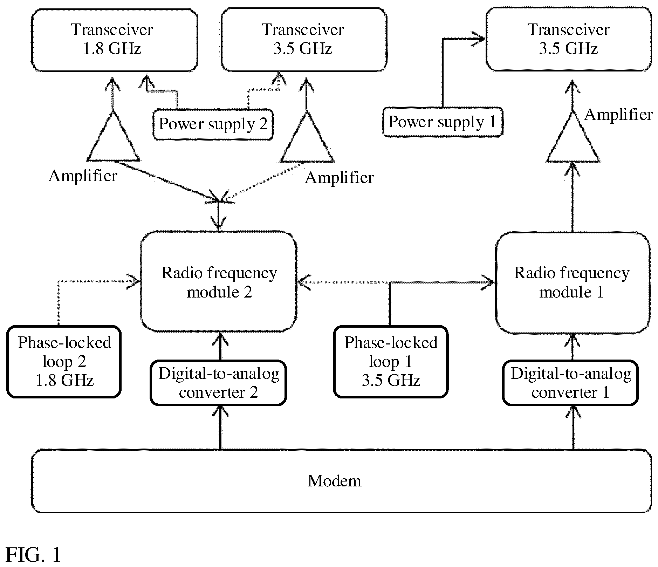

For ease of understanding, refer to a schematic diagram of an application scenario shown in FIG. 1. As shown in FIG. 1, when the UE performs two-Tx transmission at 3.5 GHz, a power supply 2 provides power for a 3.5 GHz transceiver, and 3.5 GHz carriers generated by a phase-locked loop 1 are respectively sent to a radio frequency module 1 and a radio frequency module 2. The radio frequency module 1 and the radio frequency module 2 respectively modulate, by using the 3.5 GHz carriers, baseband signals sent by digital-to-analog converters corresponding to the radio frequency module 1 and the radio frequency module 2, to obtain radio frequency signals. The radio frequency signal output by the radio frequency module 1 is amplified and transmitted by using a transmitter corresponding to the 3.5 GHz carrier corresponding to the radio frequency module 1. The radio frequency signal output by the radio frequency module 2 is amplified and transmitted by using a transmitter corresponding to the 3.5 GHz carrier corresponding to the radio frequency module 2. When the UE performs one transmission at 1.8 GHz, the power supply 2 provides power for a 1.8 GHz transceiver, and a 1.8 GHz carrier generated by a phase-locked loop 2 is sent to the radio frequency module 2. The radio frequency module 2 adjusts, by using the 1.8 GHz carrier, a baseband signal sent by a digital-to-analog converter 2, to obtain a radio frequency signal. The radio frequency signal output by the radio frequency module 2 is amplified and transmitted by using a transmitter corresponding to the 1.8 GHz carrier corresponding to the radio frequency module 2.

The embodiments of this application may be applied to architectures, such as supplemental uplink (supplemental uplink, SUL), uplink carrier aggregation (uplink carrier aggregation, UL CA), and LTE-NR dual connectivity (LTE-NR dual connectivity, EN-DC). To facilitate understanding of specific forms of the foregoing architectures, the foregoing three architectures are described below with reference to the accompanying drawings.

With development of 5G services, to greatly improve uplink experience and shorten delay without changing downlink experience is a new requirement and challenge for a network. However, coverage of a wireless network has an uplink shortcoming. For example, power of a base station can reach 200 W. When the base station sends a signal to a mobile phone, there is no need to worry about a downlink coverage distance. However, transmit power of the mobile phone is only 0.2 W. When the mobile phone transmits a signal to the base station, an uplink coverage distance is limited. In addition, a higher frequency band leads to a shorter coverage distance. A Coverage distance of a 3.5G frequency band is 50% less than that of a main 4G frequency band, in other words, a 1.8G/2.1G frequency band. To achieve a high speed of 5G and implement uplink coverage, some practical solutions are proposed, for example, supplemental uplink SUL, uplink carrier aggregation UL CA, and EN-DC.

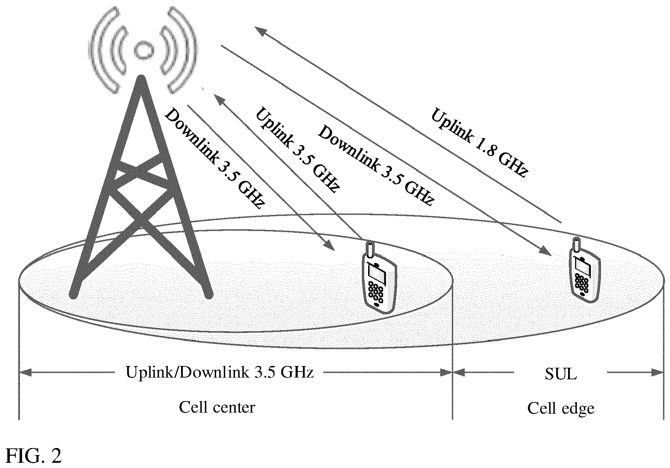

SUL: One cell (Cell) usually includes an uplink carrier (uplink carrier) and a downlink carrier (downlink carrier), and the uplink carrier and the downlink carrier are in a same frequency band. However, in the 5G era, frequencies used are high, and a higher frequency band leads to a greater signal transmission loss. Because transmit power of the UE is limited, uplink coverage of the UE is limited. Therefore, an SUL technology is proposed in the industry, to ensure the uplink coverage of the UE by providing a supplemental uplink (generally in a low frequency band, for example, an LTE frequency band). An uplink originally corresponding to the UE is referred to as a normal uplink (normal uplink, NUL), and the supplemental uplink is referred to as an SUL. Generally, a frequency (for example, 1.8 GHz) corresponding to the SUL is lower than that of the NUL, and a signal loss is smaller, so that the uplink coverage of the UE can be ensured. The UE may dynamically select a transmission link between the NUL and the SUL. For ease of understanding, as shown in a schematic diagram of an application scenario in FIG. 2, at a cell center, data reception and sending are performed by using a 3.5 GHz carrier on both an uplink and a downlink of the UE. On a cell edge of the cell, the SUL is activated, and the UE switches an uplink task from the 3.5 GHz carrier to a 1.8 GHz carrier.

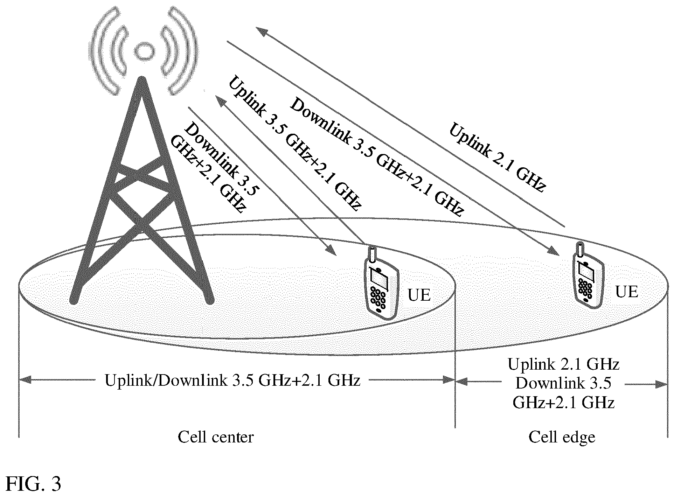

Carrier aggregation, as the term implies, is to aggregate a plurality of carriers for sending. Because frequency bands that can be allocated to each operator are limited and not necessarily continuous, if each UE can use only several of the frequency bands, a rate of the UE is limited. If the UE supports carrier aggregation, several completely independent carriers are bundled together for the UE to use, to improve the rate of the UE. For ease of understanding, refer to a diagram of an application scenario shown in FIG. 3. In this embodiment, aggregation of a 3.5 GHz carrier and a 2.1 GHz carrier is used as an example. At a cell center, UE may transmit uplink data by using both the 3.5 GHz carrier and the 2.1 GHz carrier. In other words, at the cell center, uplink data is transmitted on one of two-Tx transmission links of the UE by using the 3.5 GHz carrier, and uplink data is transmitted on the other transmission link by using the 2.1 GHz carrier. When the UE supports 2Tx uplink transmission by using the 3.5 GHz carrier, at the cell center, uplink data may be transmitted on either of the two-Tx transmission links of the UE by using the 3.5 GHz carrier. On the cell edge, the UE transmits uplink data by using the 2.1 GHz carrier. When the UE supports one-Tx uplink transmission at 2.1 GHz, uplink data is transmitted on one of the transmission links of the UE by using the 2.1 GHz carrier. When the UE supports 2Tx uplink transmission at 2.1 GHz, uplink data may be transmitted on either of the two-Tx transmission links of the UE by using the 2.1 GHz carrier.

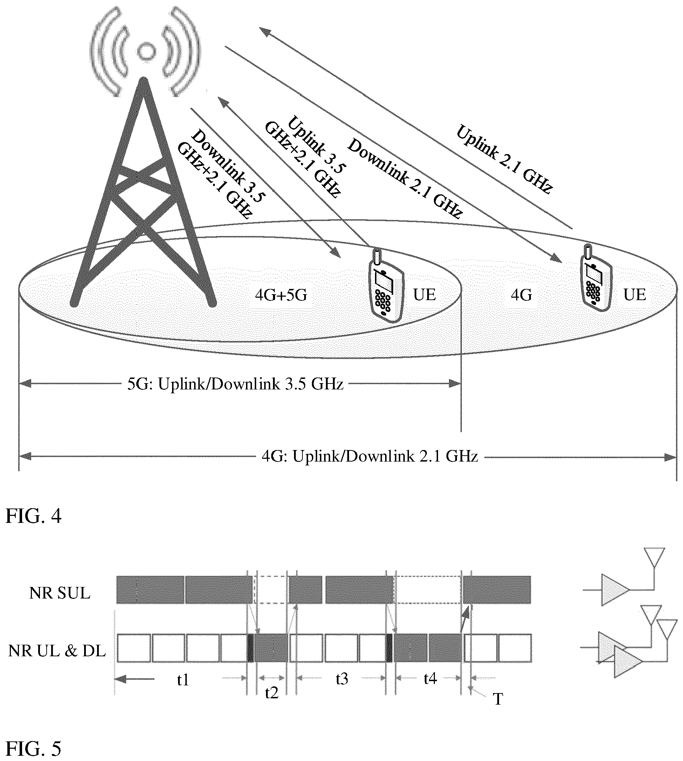

EN-DC, in other words, a non-independent networking architecture, is that the UE can perform communication by using both 4G and 5G. For ease of understanding, refer to a schematic diagram of an application scenario shown in FIG. 4. Within a common coverage (the cell center) of 4G and 5G, the UE may connect to both 3.5 GHz (a TDD mode) of 5G and 2.1 GHz (an FDD mode) of 4G. When the UE moves out of a 5G coverage (the cell edge), the UE is disconnected from 5G and performs uplink and downlink communication by using 4G.

As an uplink carrier switching technology is proposed, under a configuration of the SUL, the UL CA, or the EN-DC, the UE may switch one set of transmission resources between two carriers, and enable two sets of transmission resources to be used for one carrier. Refer to a schematic diagram of SUL-based uplink carrier switching shown in FIG. 5. Within a time period t1, the UE may transmit uplink data by using a carrier corresponding to the SUL, and receive downlink data by using a carrier corresponding to an NR downlink (downlink, DL). When a carrier switching time arrives, the UE does not transmit uplink data within a time interval T. After completing carrier switching, the UE transmits uplink data by using a carrier corresponding to the NUL within a time period t2. When the carrier switching time arrives again, the UE performs uplink carrier switching, continues to transmit uplink data by using the SUL carrier within a time period t3, and receives downlink data by using the carrier corresponding to the NR DL. As shown in FIG. 5, the SUL corresponds to one set of transmission links, and the NUL corresponds to two sets of transmission links. To be specific, uplink data may be transmitted on one set of transmission links by using the carrier corresponding to the SUL, while transmission of uplink data is transmitted on two sets of transmission links by using the carrier corresponding to the NUL at the same time.

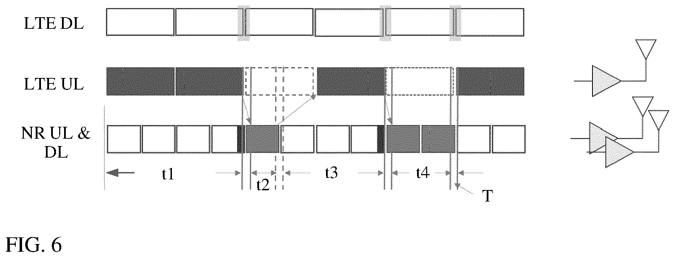

Refer to EN-DC-based uplink carrier switching shown in FIG. 6. Within a time period t1, the UE may transmit uplink data by using a carrier corresponding to the LTE SUL, and receive downlink data by using a carrier corresponding to either of the NDL and the LTE DL. When a carrier switching time arrives, the UE does not transmit uplink data within a time interval T. After completing carrier switching, the UE transmits uplink data by using the carrier corresponding to the NUL within a time period t2. Because two-Tx transmission is performed on the carrier corresponding to the NUL within the time period t2, the UE no longer transmits uplink data by using the carrier corresponding to the LTE UL.

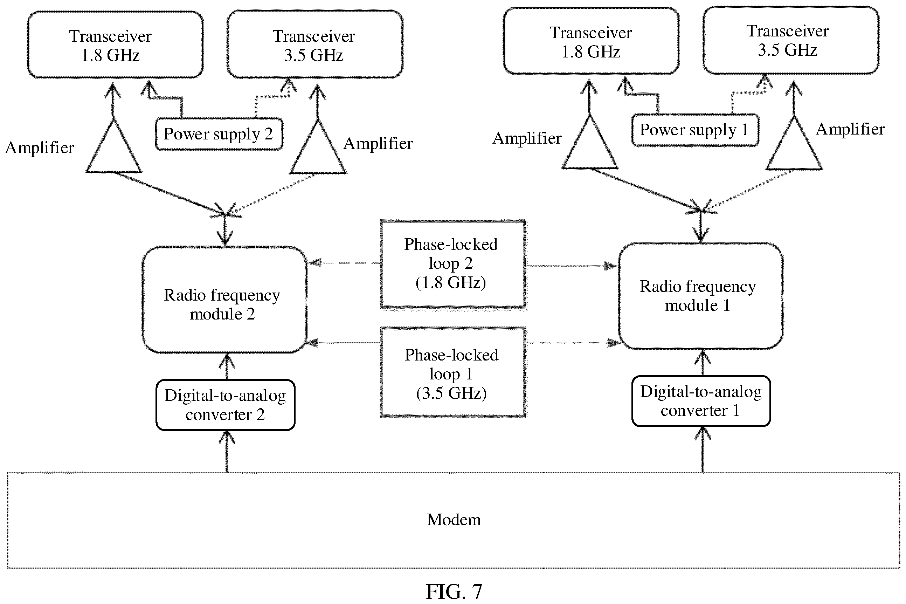

During evolution of the UE, in a stronger implementation, the UE may support 2Tx uplink transmission on each of two carriers. For example, the UL MIMO is supported at both 1.8 GHz and 3.5 GHz. In this way, uplink carrier switching continues to evolve, to implement switching between two-transmission carriers. For example, in a schematic diagram of an internal structure of UE shown in FIG. 7, the 3.5 GHz carriers generated by the phase-locked loop 1 may be respectively sent to the radio frequency module 1 and the radio frequency module 2, to implement 2Tx uplink transmission on the 3.5 GHz carrier. The 1.8 GHz carriers generated by the phase-locked loop 2 may be respectively sent to the radio frequency module 1 and the radio frequency module 2, to implement 2Tx uplink transmission on the 1.8 GHz carrier. The UE may be scheduled by the base station, to implement switching between the 1.8 GHz carrier and the 3.5 GHz carrier.

However, currently, uplink carrier switching only supports switching of the UE between a one-transmission carrier and a two-transmission carrier. When the UE has a two-Tx transmission capability on either of the two different carriers, for example, scheduling of two-Tx transmission is allowed on a first carrier and scheduling of one-Tx transmission is allowed on a second carrier, scheduling of one-Tx transmission is allowed on the first carrier and scheduling of two-Tx transmission is allowed on the second carrier, and scheduling of two-Tx transmission are allowed on both the first carrier and the second carrier. Because a current system cannot distinguish between the foregoing different uplink modes, the base station cannot configure a corresponding uplink mode for the UE, thereby affecting the UE performing transmission of uplink data.

Based on the foregoing problem, for the UE having the capability of independently performing two-Tx transmission on either of the two different carriers, an embodiment of this application provides an uplink data transmission method. By predefining an uplink mode supported by the UE, distinction and correct configuration of different uplink modes by the base station and the UE are implemented, thereby ensuring that the UE can transmit uplink data in an uplink mode configured by the base station.

The embodiments of this application relate to user equipment. The user equipment may be a device that includes a wireless transceiver function and can cooperate with a network device to provide a communication service for a user. Specifically, the user equipment may be referred to as an access terminal, a subscriber unit, a subscriber station, a mobile station, a remote station, a remote terminal, a mobile device, a user terminal, a terminal, a wireless communication device, a user agent, a user apparatus, or the like. For example, the user equipment may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, user equipment in a 5G network or a network after 5G, or the like.

The embodiments of this application further relate to a network device. The network device may be a device configured to communicate with the user equipment. For example, the network device may be a base transceiver station (Base Transceiver Station, BTS for short) in a GSM system or a CDMA system, may be a NodeB (NodeB, NB) in a WCDMA system, or may be an evolved NodeB (Evolved Node B, eNB or eNodeB) in an LTE system. Alternatively, the network device may be a relay station, an access point, a vehicle-mounted device, a wearable device, a network-side device in a 5G network or a network after 5G, a network device in a future evolved PLMN network, or the like.

For ease of understanding, an uplink data transmission method provided in embodiments of this application is described below with reference to the accompanying drawings.

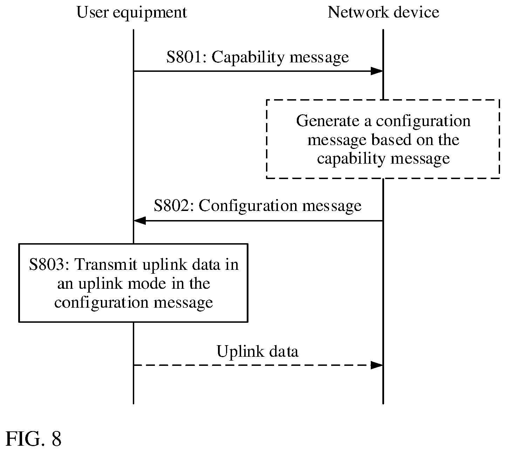

FIG. 8 is a flowchart of an uplink data transmission method according to an embodiment of this application. As shown in FIG. 8, the method may include the following steps.

S801: User equipment sends a capability message to a network device, where the capability message is used to indicate an uplink mode supported by the user equipment.

In this embodiment, the user equipment may send the capability message to the network device, to report, by using the capability message, the uplink mode supported by the user equipment. The uplink mode is an uplink mode for a first carrier and a second carrier of the user equipment. For example, the uplink mode may include one or more of an uplink mode in which scheduling of two-Tx transmission is allowed on the first carrier and scheduling of one-Tx transmission is allowed on the second carrier, an uplink mode in which scheduling of one-Tx transmission is allowed on the first carrier and scheduling of two-Tx transmission is allowed on the second carrier, and an uplink mode in which scheduling of two-Tx transmission is allowed on both the first carrier and the second carrier. The first carrier may be a carrier corresponding to a high frequency or a carrier corresponding to a low frequency.

That scheduling of two-Tx transmission is allowed on the first carrier means that uplink data may be transmitted on both of two transmission links of the UE by using the first carrier, and that scheduling of one-Tx transmission is allowed on the first carrier means that uplink data may be transmitted on one transmission link of the UE by using the first carrier. That scheduling of two-Tx transmission is allowed on the second carrier means that uplink data may be transmitted on both of the two transmission links of the UE by using the second carrier, and that scheduling of one-Tx transmission is allowed on the second carrier means that uplink data may be transmitted on one transmission link of the UE by using the second carrier.

To facilitate the network device to identify, by using the capability message, the uplink mode supported by the user equipment, a mode in which scheduling is allowed on the first carrier and the second carrier of the user equipment may be predefined. For example, the uplink mode in which scheduling of two-Tx transmission is allowed on the first carrier and scheduling of one-Tx transmission is allowed on the second carrier is defined as a first uplink mode, the uplink mode in which scheduling of one-Tx transmission is allowed on the first carrier and scheduling of two-Tx transmission is allowed on the second carrier is defined as a second uplink mode, and the uplink mode in which scheduling of two-Tx transmission is allowed on both the first carrier and the second carrier is defined as a third uplink mode. Certainly, the mode in which scheduling is allowed on the first carrier and the second carrier of the user equipment may be further defined as other forms, and the forms are not listed one by one in this embodiment.

When the user equipment supports one or more of the foregoing uplink modes, an identifier corresponding to the uplink mode supported by the user equipment may be added to the capability message. For example, the different uplink modes are identified by using a binary system, and the capability message may include a 3-digit binary identification field, for example, "xxx". When the user equipment supports the first uplink mode, a corresponding field in the capability message is set to "001". When the user equipment supports the second uplink mode, a corresponding field in the capability message is set to "010". When the user equipment supports the third uplink mode, a corresponding field in the capability message is set to "100". When the user equipment supports the first uplink mode and the second uplink mode, a corresponding field in the capability message is set to "011". When the user equipment supports the first uplink mode and the third uplink mode, a corresponding field in the capability message is set to "101". When the user equipment supports the second uplink mode and the third uplink mode, a corresponding field in the capability message is set to "110". When the user equipment supports the three uplink modes, a corresponding field in the capability message is set to "111".

S802: The network device sends a configuration message to the user equipment, where the configuration message includes the uplink mode.

In this embodiment, after obtaining the uplink mode supported by the user equipment, the network device generates the configuration message based on the uplink mode supported by the user equipment, where the configuration message includes the uplink mode. The configuration message is used to indicate the user equipment to transmit uplink data in the uplink mode included in the configuration message.

When there are a plurality of uplink modes supported by the user equipment, the configuration message sent by the network device may include all the uplink modes supported by the user equipment, and may also include some of the supported uplink modes. When the configuration message includes some of the uplink modes, before generating the configuration message, the network device may select, according to a preset selection rule, an uplink mode configured for the user equipment from the uplink modes reported by the user equipment, to generate the configuration message based on the selected uplink mode. Specifically, the network device may send the configuration message to the user equipment by using radio resource control (radio resource control, RRC) signaling.

In some embodiments, the network device may further send the configuration message to the user equipment by using the RRC signaling, to cancel the uplink mode that is previously configured by the network device for the user equipment.

S803: The user equipment transmits uplink data in the uplink mode in the configuration message.

In this embodiment, after receiving the configuration message sent by the network device, the user equipment may transmit uplink data in the uplink mode included in the configuration message.

It may be understood that when the user equipment may transmit uplink data by directly using the uplink mode in the configuration message, it indicates that the uplink mode is in an active state. If the uplink mode in the configuration message is in an inactive state, the user equipment receives an activation message from the network device, where the activation message includes a to-be-activated uplink mode. The to-be-activated uplink mode included in the activation message should be the uplink mode in the configuration message. That is, the activation message is used to activate the uplink mode included in the configuration message, so that the uplink mode is in the active state.

Specifically, the network device may send the activation message to the user equipment by using a medium access control (medium access control, MAC) control unit message, to activate the uplink mode configured by the network device for the user equipment, so that the user equipment transmits uplink data by using an activated uplink mode.

In some embodiments, the network device may further send a deactivation message to the user equipment by using the MAC control unit message, where the deactivation message includes an uplink mode, and the uplink mode is in an active state. After the user equipment receives the deactivation message, the uplink mode is enabled to be in an inactive state, thereby implementing deactivation.

In some embodiments, when the configuration message includes at least two uplink modes in an active state or the network device activates at least two uplink modes by using the activation message, to enable the user equipment to transmit uplink data by using one of the uplink modes, the network device may further indicate, by sending a control message, the user equipment to transmit uplink data by using a target uplink mode included in the control message. The target uplink mode is one of the uplink modes included in the configuration message. After receiving the control message sent by the network device, the user equipment may determine the target uplink mode based on the control message, to transmit uplink data in the target uplink mode. Specifically, the network device may send the control message to the user equipment by using a downlink control indicator (downlink control indicator, DCI) message, so that the user equipment transmits uplink data in the target uplink mode.

In some embodiments, the network device may periodically send the control message to the user equipment, to control, by using the control message, the user equipment to dynamically perform switching in different activated uplink modes. For example, the network device configures the first uplink mode and the second uplink mode for the user equipment. Within a time period t1, the user equipment transmits uplink data by using the first uplink mode based on the DCI message sent by the network device. Within a time period t2, the user equipment transmits uplink data by using the second uplink mode based on the DCI message sent by the network device.

In some embodiments, when the configuration message sent by the network device includes only one uplink mode and the uplink mode is in an active state, after receiving the configuration message, the user equipment transmits uplink data by directly using the uplink mode in the configuration message. To enable the user equipment to perform switching between different modes supported by the user equipment, the network device may periodically send the configuration message to indicate the user equipment to transmit uplink data in the uplink mode included in the configuration message, thereby implementing switching of the uplink modes, and improving data transmission efficiency.

It can be learned from the foregoing that each uplink mode includes scheduling on the first carrier and the second carrier, so that switching between the first carrier and the second carrier is related. When the user equipment performs carrier switching, to ensure that the uplink data is not lost, the network device does not schedule, within a switching time, the user equipment to transmit uplink data. Specifically, the capability message sent by the user equipment may further include a switching time corresponding to each uplink mode, where the switching time represents a time period used by the user equipment to perform switching between the first carrier and the second carrier. The network device determines, based on the capability message, the switching time corresponding to each uplink mode, thereby ensuring that the user equipment is not scheduled within the switching time to transmit uplink data.

It should be noted that, although the first carrier and the second carrier are both included in each of the foregoing uplink modes, time periods used by the user equipment to perform switching between the first carrier and the second carrier in different modes may be different. Therefore, when the capability message includes a plurality of uplink modes, the capability message may further include a switching time corresponding to each of the uplink modes.

That the user equipment transmits uplink data in the uplink mode in the configuration message specifically includes: The user equipment determines, based on a scheduling message sent by the network device, to transmit uplink data by using the first carrier or the second carrier in the uplink mode within a current time period or a future time period. The scheduling message is used to indicate the user equipment to transmit uplink data by using a target carrier, and the target carrier is the first carrier or the second carrier. For example, the network device

configures, for the user equipment, the uplink mode in which scheduling of two-Tx transmission is allowed on the first carrier and scheduling of one-Tx transmission is allowed on the second carrier, and a target carrier included in a scheduling message sent by the network device at a first moment is the first carrier. In this way, the user equipment transmits uplink data by using the first carrier on two transmission links. A target carrier included in a scheduling message sent by the network device at a second moment is the second carrier. In this way, the user equipment transmits uplink data by using the second carrier on one transmission link. The user equipment does not transmit data within a time period of performing switching from the first carrier to the second carrier.

It can be learned from the foregoing embodiment that the uplink modes supported by the user equipment specifically include three different uplink modes. In practical applications, the user equipment supports the uplink mode in which scheduling of two-Tx transmission is allowed on both the first carrier and the second carrier, and supports only one of the uplink mode in which scheduling of two-Tx transmission is allowed on the first carrier and scheduling of one-Tx transmission is allowed on the second carrier or the uplink mode in which scheduling of one-Tx transmission is allowed on the first carrier. That is, the user equipment supports the third uplink mode and the first uplink mode, or supports the third uplink mode and the second uplink mode. In this case, the network device may determine, in the following manners, the uplink mode supported by the user equipment.

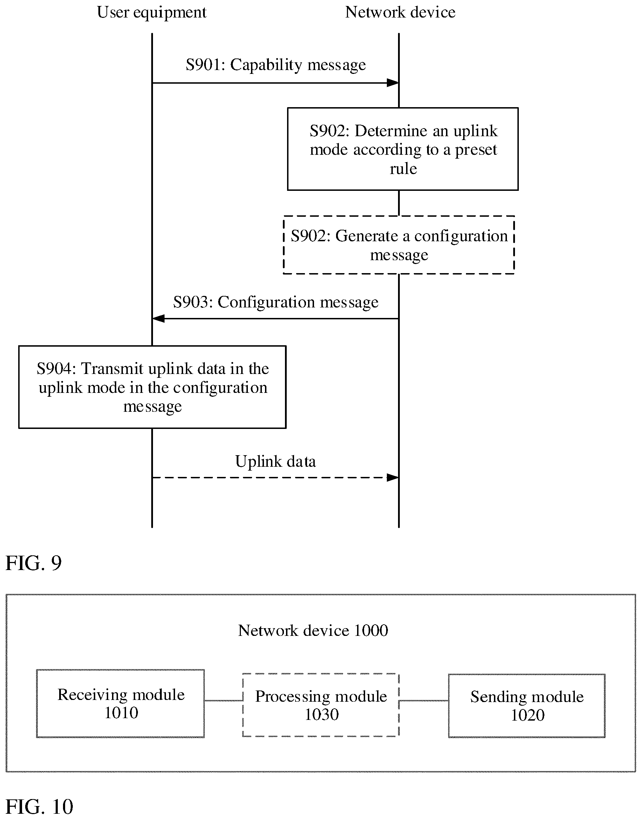

FIG. 9 is a flowchart of another uplink data transmission method according to an embodiment of this application. As shown in FIG. 9, the method may include the following steps.

S901: A network device receives a capability message from user equipment, where the capability message is used to indicate an uplink mode supported by the user equipment.

In this embodiment, the uplink mode that is supported by the user equipment and that is indicated by the capability message is an uplink mode in which scheduling of two-Tx transmission is allowed on both a first carrier and a second carrier. For specific implementation of S901, refer to S801.

S902: The network device determines, according to a preset rule, the uplink mode supported by the user equipment.

In this embodiment, the network device may determine, according to the preset rule, another uplink mode supported by the user equipment different from the uplink mode supported in S901. The another uplink mode may be one of an uplink mode in which scheduling of two-Tx transmission is allowed on the first carrier and scheduling of one-Tx transmission is allowed on the second carrier, or an uplink mode in which scheduling of one-Tx transmission is allowed on the first carrier and scheduling of two-Tx transmission is allowed on the second carrier. The preset rule is used to indicate that the first carrier or the second carrier is a carrier on which scheduling of two-Tx transmission is allowed.

In some embodiments, the network device may determine an uplink mode based on a target carrier corresponding to the preset rule, where the uplink mode is a mode indicating that scheduling of two-Tx transmission is allowed on the target carrier and scheduling of one-Tx transmission is allowed on the other carrier. The target carrier is the first carrier or the second carrier. Specifically, the target carrier may be a carrier with a high frequency among the first carrier and the second carrier, a carrier with a low frequency among the first carrier and the second carrier, a carrier for time division duplexing among the first carrier and the second carrier, a carrier reported by the user equipment, or the like. When the target carrier is the carrier reported by the user equipment, the user equipment may perform reporting by using the capability message. That is, the capability message includes the target carrier.

It should be noted that, after determining, according to the preset rule, the uplink mode supported by the user equipment, the network device further needs to obtain a switching time corresponding to the uplink mode. In this case, the user equipment may send a message including a switching time to the network device. After receiving the message, the network device may determine that the switching time included in the message is the switching time corresponding to the uplink mode determined by the network device.

In this embodiment, S902 may be performed first and then S901 may be performed, or S901 and S902 may be simultaneously performed.

S903: The network device sends a configuration message to the user equipment.

In this embodiment, after obtaining the uplink mode supported by the user equipment, the network device generates the configuration message, and sends the configuration message to the user equipment. The uplink mode included in the configuration message is an uplink mode determined by the network device based on the capability message and according to the preset rule.

S904: The user equipment transmits uplink data in the uplink mode in the configuration message.

In this embodiment, after receiving the configuration message, the user equipment transmits uplink data in the uplink mode included in the configuration message. For specific implementation of S904, refer to S803.

Specifically, the configuration message may include one or two uplink modes. When the configuration message includes one uplink mode and the uplink mode is in an active state, after receiving the configuration message, the user equipment transmits uplink data in the uplink mode. When the configuration message includes one uplink mode and the uplink mode is in an inactive state, the network device sends an activation message to the user equipment, to activate the uplink mode in the configuration message, so that the user equipment transmits uplink data by using an activated uplink mode.

When the configuration message includes two uplink modes and the two uplink modes are both in an active state, the network device may further indicate, by sending a control message, the user equipment to transmit uplink data by using a target uplink mode in the control message. When the configuration message includes two uplink modes and the two uplink modes are both in an inactive state, the network device sends an activation message to the user equipment, to activate the uplink mode in the configuration message. Specifically, the activation message may be used to activate one or two uplink modes. When two uplink modes are activated, the network device may indicate, by sending the control message, the user equipment to transmit uplink data in the target uplink mode.

Based on the uplink data transmission method provided by the foregoing embodiment, user equipment and a network device provided by embodiments of this application are described below according to the accompanying drawings.

FIG. 10 is a schematic diagram of a structure of a network device 1000 according to an embodiment of this application. The network device 1000 includes:
a receiving module 1010, configured to receive a capability message from user equipment, where the capability message is used to indicate an uplink mode supported by the user equipment, and the uplink mode is an uplink mode for a first carrier and a second carrier of the user equipment; and
a sending module 1020, configured to send a configuration message to the user equipment, where the configuration message includes the uplink mode.

In some implementations, the uplink mode includes one or more of an uplink mode in which scheduling of two-Tx transmission is allowed on the first carrier and scheduling of one-Tx transmission is allowed on the second carrier, an uplink mode in which scheduling of one-Tx transmission is allowed on the first carrier and scheduling of two-Tx transmission is allowed on the second carrier, and an uplink mode in which scheduling of two-Tx transmission is allowed on both the first carrier and the second carrier.

In some implementations, the apparatus further includes:
a processing module 1030, configured to determine, according to a preset rule, the uplink mode supported by the user equipment.

In some implementations, the processing module 1030 is specifically configured to determine the uplink mode based on a target carrier corresponding to the preset rule, where the uplink mode is an uplink mode used to indicate that scheduling of two-Tx transmission is allowed on the target carrier and scheduling of one-Tx transmission is allowed on the other carrier, and the target carrier is the first carrier or the second carrier.

In some implementations, the processing module 1030 is further configured to generate a configuration message based on the capability message.

In some implementations, the target carrier includes a carrier with a high frequency, a carrier for time division duplexing, or a carrier reported by the user equipment.

In some implementations, when the uplink mode in the configuration message is in an inactive state, the sending module 1020 is further configured to send an activation message to the user equipment, where the activation message includes a to-be-activated uplink mode, the to-be-activated uplink mode is the uplink mode in the configuration message, and the activation message is used to indicate that the uplink mode is in an active state, so that the user equipment transmits uplink data in the uplink mode in an active state.

In some implementations, when at least two uplink modes are both in an active state, the sending module 1020 is further configured to send a control message to the user equipment, where the control message includes a target uplink mode, and the control message is used to indicate the user equipment to transmit uplink data in the target uplink mode.

In some implementations, the processing module 1030 is further configured to reserve a switching slot based on an uplink mode currently used by the user equipment and a switching time corresponding to the uplink mode, where the switching time represents a time period used by the user equipment to perform switching between the first carrier and the second carrier.

It should be noted that the receiving module 1010 in this embodiment may be implemented by a receiver or a receiver-related circuit component, the sending module 1020 may be implemented by a transmitter or a transmitter-related circuit, and the processing module 1030 may be implemented by a processor or a processor-related circuit component. For specific implementation of each module in this embodiment, refer to the operations performed by the network device in the foregoing method embodiments.

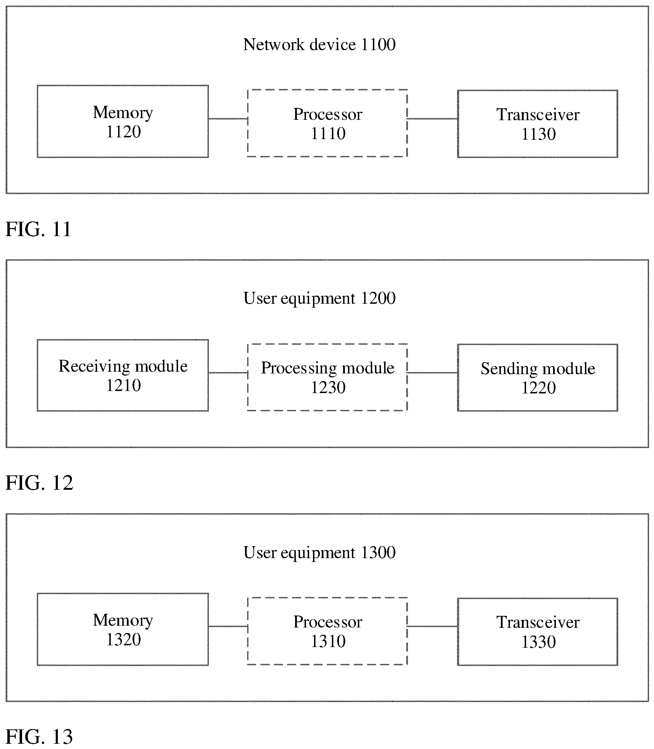

As shown in FIG. 11, an embodiment of this application further provides a network device 1100. The network device 1100 includes:
a processor 1110, a memory 1120, and a transceiver 1130, where the memory 1120 stores instructions or a program, and the processor 1110 is configured to execute the instructions or the program stored in the memory 1120. When the instructions or the program stored in the memory 1120 is executed, the processor 1110 is configured to perform the operations performed by the processing module 1003 in the foregoing embodiment, and the transceiver 1130 is configured to perform the operations performed by the receiving module 1001 and the sending module 1002 in the foregoing embodiment.

It should be understood that the network device 1000 or the network device 1100 in the embodiment of this application may correspond to the network device in the communication methods 800 and 900 in the embodiment of this application, and the operations and/or the functions of the various modules in the network device 1000 and the network device 1100 are respectively to implement the corresponding processes of the various methods in FIG. 8 and FIG. 9. For brevity, details are not described herein again.

In another form of this embodiment, a computer-readable storage medium is provided, where the computer-readable storage medium stores a computer program, and when the computer program is run, the method on a network device side in the foregoing method embodiment is performed.

In another form of this embodiment, a computer program product including instructions is provided, and when the instructions are executed, the method on a network device side in the foregoing method embodiment is performed.

FIG. 12 is a schematic diagram of a structure of user equipment 1200 according to an embodiment of this application. The user equipment 1200 includes:
a receiving module 1210, configured to receive a configuration message from a network device, where the configuration message includes an uplink mode, and the uplink mode is an uplink mode for a first carrier and a second carrier of the user equipment; and
a sending module 1220, configured to transmit uplink data in the uplink mode included in the configuration message.

In some implementations, the uplink mode includes one or more of an uplink mode in which scheduling of two-Tx transmission is allowed on the first carrier and scheduling of one-Tx transmission is allowed on the second carrier, an uplink mode in which scheduling of one-Tx transmission is allowed on the first carrier and scheduling of two-Tx transmission is allowed on the second carrier, and an uplink mode in which scheduling of two-Tx transmission is allowed on both the first carrier and the second carrier.

In some implementations, the user equipment further includes:
a processing module 1230, configured to generate a capability message based on the uplink mode supported by the user equipment.

In some implementations, the sending module 1220 is further configured to send the capability message to the network device, where the capability message is used to indicate the uplink mode supported by the user equipment, and the uplink mode is an uplink mode for the first carrier and the second carrier of the user equipment.

In some implementations, when the uplink mode in the configuration message is in an inactive state, the receiving module 1210 is further configured to receive an activation message from the network device, where the activation message includes a to-be-activated uplink mode, the to-be-activated uplink mode is the uplink mode in the configuration message, and the activation message is used to indicate that the uplink mode is in an active state; and
the sending module 1220 is specifically configured to transmit uplink data in the uplink mode in an active state.

In some implementations, when at least two uplink modes are both in an active state, the receiving module is further configured to receive a control message from the network device, where the control message includes a target uplink mode; and
the sending module 1220 is specifically configured to transmit uplink data in the target uplink mode.

In some implementations, the capability message includes a target carrier, the target carrier is a carrier on which scheduling of two-Tx transmission is allowed, and the target carrier is the first carrier or the second carrier.

In some implementations, the capability message includes a switching time corresponding to the uplink mode, and the switching time represents a time period used by the user equipment to perform switching between the first carrier and the second carrier.

It should be noted that the receiving module 1210 in this embodiment may be implemented by a receiver or a receiver-related circuit component, the sending module 1220 may be implemented by a transmitter or a transmitter-related circuit, and the processing module 1230 may be implemented by a processor or a processor-related circuit component. For specific implementation of each module in this embodiment, refer to the operations performed by the user equipment in the foregoing method embodiments.

As shown in FIG. 13, an embodiment of this application further provides user equipment 1300. The user equipment 1300 includes a processor 1310, a memory 1320, and a transceiver 1330. The memory 1320 stores instructions or a program. The processor 1310 is configured to execute the instructions or the program stored in the memory 1320. When the instructions or the program stored in the memory 1320 is executed, the processor 1310 is configured to perform the operations performed by the processing module 1230 in the foregoing embodiment, and the transceiver 1330 is configured to perform the operations performed by the receiving module 1210 and the sending module 1220 in the foregoing embodiment.

It should be understood that the user equipment 1200 or the user equipment 1300 in the embodiment of this application may correspond to the user equipment in the communication methods 800 and 900 in the embodiments of this application, and the operations and/or the functions of the various modules in the user equipment 1200 and the user equipment 1300 are respectively to implement the corresponding processes of the various methods in FIG. 8 and FIG. 9. For brevity, details are not described herein again.

In another form of this embodiment, a computer-readable storage medium is provided, where the computer-readable storage medium stores a computer program, and when the computer program is run, the method on a user equipment side in the foregoing method embodiment is performed.

In another form of this embodiment, a computer program product including instructions is provided, and when the instructions are executed, the method on a user equipment side in the foregoing method embodiment is performed.

An embodiment of this application further provides a communication apparatus. The communication apparatus may be user equipment or a circuit. The communication apparatus may be configured to perform the actions performed by the user equipment in the foregoing method embodiment.

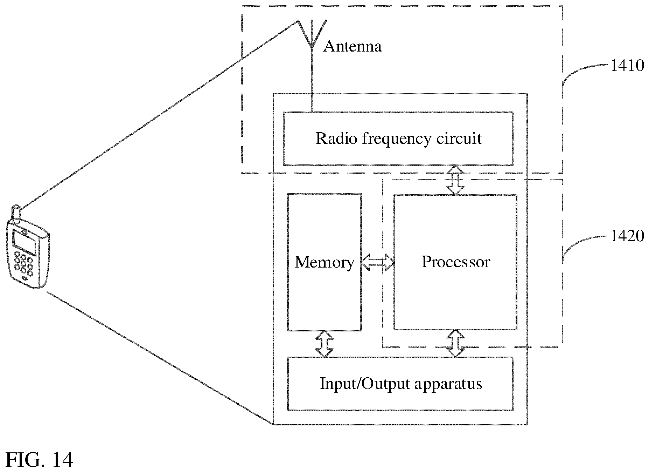

When the communication apparatus is the user equipment, FIG. 14 is a schematic diagram of a structure of user equipment according to an embodiment of this application. For ease of understanding, a mobile phone is used as an example for illustration. As shown in FIG. 14, the user equipment may include a processor, a memory, a radio frequency circuit, an antenna, and an input/output apparatus. The processor is mainly configured to: process a communication protocol and communication data, control a terminal device, execute a software program, process data of the software program, and the like. The memory is mainly configured to store a software program and data. The radio frequency circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, or a keyboard, is mainly configured to receive data entered by a user and output data to the user. It should be noted that some types of terminal devices may have no input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the user equipment, the radio frequency circuit receives the radio frequency signal through the antenna, converts the radio frequency signal into a baseband signal, and outputs the baseband signal to the processor. The processor converts the baseband signal into data and processes the data. For ease of description, FIG. 14 shows only one memory and one processor. An actual user equipment product may include one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna with a transceiver function and a radio frequency circuit may be considered as a transceiver unit of the user equipment, and a processor with a processing function may be considered as a processing unit of the user equipment. As shown in FIG. 14, the user equipment includes a transceiver unit 1410 and a processing unit 1420. The transceiver unit may also be referred to as a transceiver, a transceiver apparatus, or the like. The processing unit may also be referred to as a processor, a processing board, a processing module, a processing apparatus, or the like. Optionally, a device for implementing a receiving function in the transceiver unit 1410 may be considered as a receiving unit, and a device for implementing a sending function in the transceiver unit 1410 may be considered as a sending unit. In other words, the transceiver unit 1410 includes the receiving unit and the sending unit. The transceiver unit sometimes may also be referred to as a transceiver, a transceiver circuit, or the like. The receiving unit sometimes may also be referred to as a receiver, a receiver circuit, or the like. The sending unit may also be sometimes referred to as a transmitter, a transmit circuit, or the like.

It should be understood that the transceiver unit 1410 is configured to perform the sending operation and the receiving operation on a terminal device side in the foregoing method embodiment, and the processing unit 1420 is configured to perform other operations on the terminal device in the foregoing method embodiment different from the sending and receiving operations.

For example, in an implementation, the transceiver unit 1410 is configured to perform the sending operation on a user equipment side in S810 in FIG. 8, and/or the transceiver unit 1410 is further configured to perform other receiving and sending steps on the user equipment side in this embodiment of this application. The processing unit 1420 is configured to perform S803 in FIG. 8, and/or the processing unit 1420 is further configured to perform another processing step on the user equipment side in this embodiment of this application.

For another example, in another implementation, the transceiver unit 1410 is configured to perform the sending operation on the user equipment side in S901 in FIG. 9 or the receiving operation on the user equipment side in S903 in FIG. 9, and/or the transceiver unit 1410 is further configured to perform other receiving and sending steps on the user equipment side in this embodiment of this application. The processing unit 1420 is configured to perform S902 in FIG. 9, and/or the processing unit 1420 is further configured to perform another processing step on the user equipment side in this embodiment of this application.

When the communication apparatus is a chip-like apparatus or a circuit, the apparatus may include a transceiver unit and a processing unit. The transceiver unit may be an input/output circuit and/or a communication interface; and the processing unit is an integrated processor, a microprocessor, or an integrated circuit.

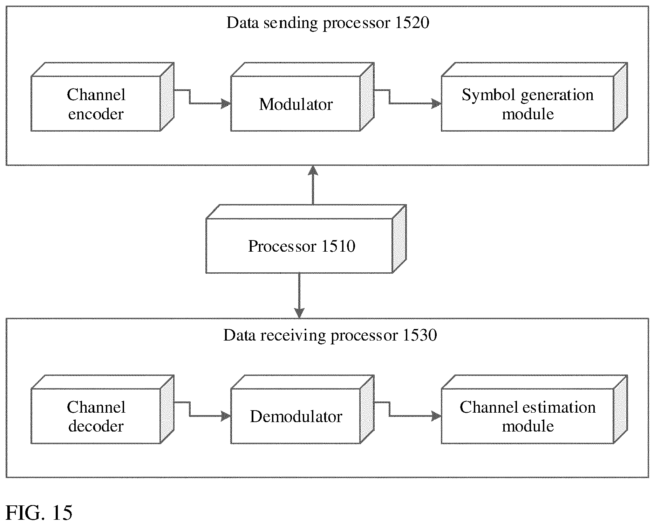

When the communication apparatus in this embodiment is the user equipment, refer to a device shown in FIG. 15. In an example, the device may complete functions similar to the functions of the processor 1310 in FIG. 13. In FIG. 15, the device includes a processor 1510, a data sending processor 1520, and a data receiving processor 1530. The processing module 710 in the foregoing embodiment may be the processor 1510 in FIG. 15 and completes corresponding functions. The sending module 1230 in the foregoing embodiment may be the data sending processor 1520 in FIG. 15, and the receiving module 1210 may be the data receiving processor 1530. Although a channel encoder and a channel decoder are shown in FIG. 15, it may be understood that the modules do not constitute a limiting description of this embodiment, but are only illustrative.

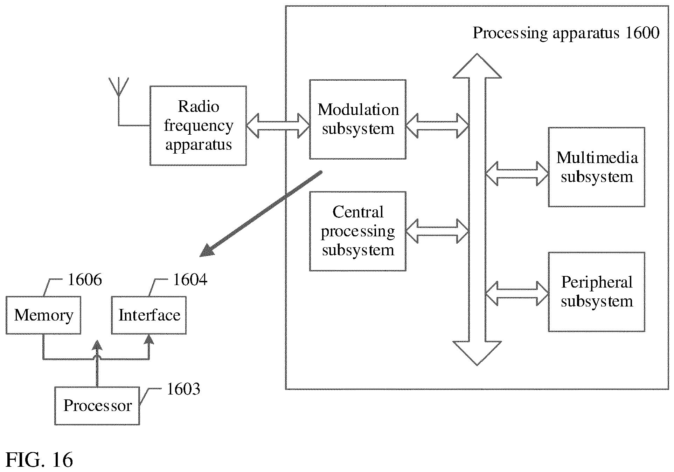

FIG. 16 shows another form of this embodiment. A processing apparatus 1600 includes modules such as a modulation subsystem, a central processing subsystem, and a peripheral subsystem. The communication apparatus in this embodiment may be used as the modulation subsystem. Specifically, the modulation subsystem may include a processor 1603 and an interface 1604. The processor 1603 completes the functions of the processing module 1230, and the interface 1604 completes the functions of the receiving module 1210 and the sending module 1220. As another variant, the modulation subsystem includes a memory 1606, a processor 1603, and a program that is stored in the memory 1606 and that can be run on the processor, and the processor 1603 implements the method on the terminal device side in the foregoing method embodiment when executing the program. It should be noted that the memory 1606 may be non-volatile or volatile, and may be located inside the modulation subsystem or in the processing apparatus 1600, as long as the memory 1606 may be connected to the processor 1603.

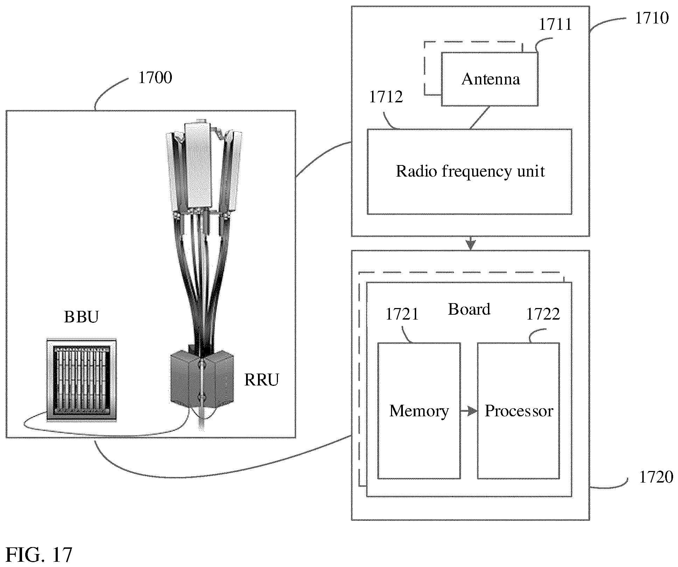

When the communication apparatus in this embodiment is a network device, the network device may be shown in FIG. 17, and an apparatus 1700 includes one or more radio frequency units, such as a remote radio unit (remote radio unit, RRU) 1710 and one or more baseband units (baseband unit, BBU) (also referred to as digital units, digital unit, DU) 1720. The RRU 1710 may be referred to as a transceiver module, and corresponds to the receiving module 1010 and the sending module 1020 in FIG. 10. Optionally, the transceiver module may be further referred to as a transceiver circuit, a transceiver, or the like, and may include at least one antenna 1711 and a radio frequency unit 1712. Part of the RRU 1710 is mainly configured to receive and send a radio frequency signal and convert the radio frequency signal and a baseband signal, for example, configured to send indication information to a terminal device. Part of the BBU 1720 is mainly configured to perform baseband processing, control a base station, and the like. The RRU 1710 and the BBU 1720 may be physically disposed together or physically separated, that is, they are distributed base stations.

The BBU 1720 is a control center of a base station, or may be referred to as a processing module. The BBU 1720 may correspond to the processing module 1030 in FIG. 10, and is mainly configured to complete baseband processing functions, such as channel coding, multiplexing, modulation, and spectrum spreading. For example, the BBU (processing module) may be configured to control the base station to perform operation procedures related to a network device in the foregoing method embodiments, for example, to generate the foregoing indication information and the like.

In an example, the BBU 1720 may be formed by one or more boards, and the plurality of boards may jointly support a wireless access network (such as an LTE network) of a single access standard, or may respectively support wireless access networks of different access standards (such as an LTE network, a 5G network, or another network). The BBU 1720 further includes a memory 1721 and a processor 1722. The memory 1721 is configured to store necessary instructions and data. The processor 1722 is configured to control the base station to perform necessary actions, for example, configured to control the base station to perform the operation procedures related to the network device in the foregoing method embodiments. The memory 1721 and the processor 1722 may serve one or more boards. In other words, a memory and a processor may be deployed on each board. Alternatively, a plurality of boards may share a same memory and a same processor. In addition, a necessary circuit may be further disposed on each board.

It should be understood that, the processor mentioned in the embodiments of the present invention may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, discrete gate or transistor logic device, discrete hardware component, or the like. The general-purpose processor may be a microprocessor, or the processor may be any conventional processor or the like.

It should be further understood that the memory mentioned in the embodiments of the present invention may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) and is used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, or another programmable logic device, discrete gate or transistor logic device, or discrete hardware component, the memory (a storage module) is integrated into the processor.

It should be noted that the memory described in this specification is intended to include but not limited to these memories and any memory of another appropriate type.

In this specification, the claims, and the accompanying drawings of this application, terms "first", "second", "third", "fourth", and the like (if existent) are intended to distinguish between similar objects but do not necessarily indicate a specific order or sequence. It should be understood that the data used in such a way are interchangeable in appropriate circumstances, so that the embodiments described herein can be implemented in an order other than the content illustrated or described herein. In addition, terms such as "include", "have", and any variations thereof are intended to cover non-exclusive inclusions, for example, a process, method, system, product, or device that includes a list of steps or units is not necessarily limited to those clearly listed steps or units, but may include other steps or units that are not clearly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of the embodiments.

In addition, business units in the embodiments of this application may be integrated into one processing unit, each of the units may exist alone physically, or two or more units may be integrated into one unit. The integrated unit may be implemented in a form of hardware, or may be implemented in a form of a software business unit.

When the integrated unit is implemented in the form of a software business unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, businesses described in the present invention may be implemented by hardware, software, firmware, or any combination thereof. When the businesses are implemented by software, the foregoing businesses may be stored in a computer-readable medium or transmitted as one or more instructions or code in a computer-readable medium. The computer-readable medium includes a computer storage medium and a communication medium. The communication medium includes any medium that facilitates transmission of a computer program from one place to another. The storage medium may be any available medium accessible to a general-purpose or a special-purpose computer.

The foregoing specific embodiments further describe the objectives, technical solutions and beneficial effects of the present invention in detail. It should be understood that the foregoing is merely specific embodiments of the present invention.

In conclusion, the foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. An uplink data transmission method, wherein the method comprises:
receiving, by a network device, a capability message from user equipment, wherein the capability message is used to indicate an uplink mode supported by the user equipment, and the uplink mode is an uplink mode for a first carrier and a second carrier of the user equipment; and
sending, by the network device, a configuration message to the user equipment, wherein the configuration message comprises the uplink mode.

2. The method according to claim 1, wherein the uplink mode comprises one or more of an uplink mode in which scheduling of two-Tx transmission is allowed on the first carrier and scheduling of one-Tx transmission is allowed on the second carrier, an uplink mode in which scheduling of one-Tx transmission is allowed on the first carrier and scheduling of two-Tx transmission is allowed on the second carrier, and an uplink mode in which scheduling of two-Tx transmission is allowed on both the first carrier and the second carrier.

3. The method according to claim 1, wherein the method further comprises:
determining, by the network device according to a preset rule, the uplink mode supported by the user equipment.

4. The method according to claim 3, wherein the determining, by the network device according to a preset rule, the uplink mode supported by the user equipment comprises:
determining, by the network device, the uplink mode based on a target carrier corresponding to the preset rule, wherein the uplink mode is an uplink mode used to indicate that scheduling of two-Tx transmission is allowed on the target carrier and scheduling of one-Tx transmission is allowed on the other carrier, and the target carrier is the first carrier or the second carrier.

5. The method according to claim 4, wherein the target carrier comprises a carrier with a high frequency, a carrier for time division duplexing, or a carrier reported by the user equipment.

6. The method according to any one of claims 1 to 5, wherein when the uplink mode comprised in the configuration message is in an inactive state, the method further comprises:
sending, by the network device, an activation message to the user equipment, wherein the activation message comprises a to-be-activated uplink mode, the to-be-activated uplink mode is the uplink mode in the configuration message, and the activation message is used to indicate that the uplink mode is in an active state, so that the user equipment transmits uplink data in the uplink mode in an active state.

7. The method according to any one of claims 1 to 6, wherein when at least two uplink modes are both in an active state, the method further comprises:
sending, by the network device, a control message to the user equipment, wherein the control message comprises a target uplink mode, and the control message is used to indicate the user equipment to transmit uplink data in the target uplink mode.

8. The method according to any one of claims 1 to 7, wherein the method further comprises:
reserving, by the network device, a switching slot based on an uplink mode currently used by the user equipment and a switching time corresponding to the uplink mode, wherein the switching time represents a time period used by the user equipment to perform switching between the first carrier and the second carrier.

9. An uplink data transmission method, wherein the method comprises:
receiving, by user equipment, a configuration message from a network device, wherein the configuration message comprises an uplink mode, and the uplink mode is an uplink mode for a first carrier and a second carrier of the user equipment; and
transmitting, by the user equipment, uplink data in the uplink mode in the configuration message.

10. The method according to claim 9, wherein the uplink mode comprises one or more of an uplink mode in which scheduling of two-Tx transmission is allowed on the first carrier and scheduling of one-Tx transmission is allowed on the second carrier, an uplink mode in which scheduling of one-Tx transmission is allowed on the first carrier and scheduling of two-Tx transmission is allowed on the second carrier, and an uplink mode in which scheduling of two-Tx transmission is allowed on both the first carrier and the second carrier.

11. The method according to claim 9 or 10, wherein the method further comprises:
sending, by the user equipment, a capability message to the network device, wherein the capability message is used to indicate the uplink mode supported by the user equipment, and the uplink mode is an uplink mode for the first carrier and the second carrier of the user equipment.

12. The method according to any one of claims 9 to 11, wherein when the uplink mode in the configuration message is in an inactive state, the transmitting, by the user equipment, uplink data in the uplink mode in the configuration message comprises:
receiving, by the user equipment, an activation message from the network device, wherein the activation message comprises a to-be-activated uplink mode, the to-be-activated uplink mode is the uplink mode in the configuration message, and the activation message is used to indicate that the uplink mode is in an active state; and
transmitting, by the user equipment, uplink data in the uplink mode in an active state.

13. The method according to any one of claims 9 to 12, wherein when at least two uplink modes are both in an active state, the transmitting, by the user equipment, uplink data in the uplink mode in the configuration message comprises:
receiving, by the user equipment, a control message from the network device, wherein the control message comprises a target uplink mode; and
transmitting, by the user equipment, uplink data in the target uplink mode.

14. The method according to any one of claims 11 to 13, wherein the capability message comprises a target carrier, the target carrier is a carrier on which scheduling of two-Tx transmission is allowed, and the target carrier is the first carrier or the second carrier.

15. The method according to any one of claims 11 to 14, wherein the capability message comprises a switching time corresponding to the uplink mode, and the switching time represents a time period used by the user equipment to perform switching between the first carrier and the second carrier.

16. A communication apparatus, comprising:
a receiving module, configured to receive a capability message from user equipment, wherein the capability message is used to indicate an uplink mode supported by the user equipment, and the uplink mode is an uplink mode for a first carrier and a second carrier of the user equipment; and
a sending module, configured to send a configuration message to the user equipment, wherein the configuration message comprises the uplink mode.

17. The apparatus according to claim 16, wherein the uplink mode comprises one or more of an uplink mode in which scheduling of two-Tx transmission is allowed on the first carrier and scheduling of one-Tx transmission is allowed on the second carrier, an uplink mode in which scheduling of one-Tx transmission is allowed on the first carrier and scheduling of two-Tx transmission is allowed on the second carrier, and an uplink mode in which scheduling of two-Tx transmission is allowed on both the first carrier and the second carrier.

18. The apparatus according to claim 16, wherein the apparatus further comprises:
a processing module, configured to determine, according to a preset rule, the uplink mode supported by the user equipment.

19. The apparatus according to claim 18, wherein the processing module is specifically configured to determine the uplink mode based on a target carrier corresponding to the preset rule, wherein the uplink mode is an uplink mode used to indicate that scheduling of two-Tx transmission is allowed on the target carrier and scheduling of one-Tx transmission is allowed on the other carrier, and the target carrier is the first carrier or the second carrier.

20. The apparatus according to claim 19, wherein the target carrier comprises a carrier with a high frequency, a carrier for time division duplexing, or a carrier reported by the user equipment.

21. The apparatus according to any one of claims 16 to 20, wherein when the uplink mode in the configuration message is in an inactive state, the sending module is further configured to send an activation message to the user equipment, wherein the activation message comprises a to-be-activated uplink mode, the to-be-activated uplink mode is the uplink mode in the configuration message, and the activation message is used to indicate that the uplink mode is in an active state, so that the user equipment transmits uplink data in the uplink mode in an active state.

22. The apparatus according to any one of claims 16 to 21, wherein when at least two uplink modes are both in an active state, the sending module is further configured to send a control message to the user equipment, wherein the control message comprises a target uplink mode, and the control message is used to indicate the user equipment to transmit uplink data in the target uplink mode.

23. The apparatus according to any one of claims 16 to 22, wherein the processing module is further configured to reserve a switching slot based on an uplink mode currently used by the user equipment and a switching time corresponding to the uplink mode, wherein the switching time represents a time period used by the user equipment to perform switching between the first carrier and the second carrier.

24. A communication apparatus, comprising:
a receiving module, configured to receive a configuration message from a network device, wherein the configuration message comprises an uplink mode, and the uplink mode is an uplink mode for a first carrier and a second carrier of the user equipment; and
a sending module, configured to transmit uplink data in the uplink mode in the configuration message.

25. The apparatus according to claim 24, wherein the uplink mode comprises one or more of an uplink mode in which scheduling of two-Tx transmission is allowed on the first carrier and scheduling of one-Tx transmission is allowed on the second carrier, an uplink mode in which scheduling of one-Tx transmission is allowed on the first carrier and scheduling of two-Tx transmission is allowed on the second carrier, and an uplink mode in which scheduling of two-Tx transmission is allowed on both the first carrier and the second carrier.

26. The apparatus according to claim 24 or 25, wherein the sending module is further configured to send a capability message to the network device, wherein the capability message is used to indicate the uplink mode supported by the user equipment, and the uplink mode is an uplink mode for the first carrier and the second carrier of the user equipment.

27. The apparatus according to any one of claims 24 to 26, wherein when the uplink mode in the configuration message is in an inactive state, the receiving module is further configured to receive an activation message from the network device, wherein the activation message comprises a to-be-activated uplink mode, the to-be-activated uplink mode is the uplink mode in the configuration message, and the activation message is used to indicate that the uplink mode is in an active state; and
the sending module is specifically configured to transmit uplink data in the uplink mode in the active state.

28. The apparatus according to any one of claims 24 to 27, wherein when at least two uplink modes are both in an active state, the receiving module is further configured to receive a control message from the network device, wherein the control message comprises a target uplink mode; and
the sending module is specifically configured to transmit uplink data in the target uplink mode.

29. A communication apparatus, wherein the apparatus comprises a processor and a memory, and the processor is connected to the memory;
the memory is configured to store a computer program; and
the processor is configured to execute the computer program in the memory, to perform the method according to any one of claims 1 to 8 or any one of claims 9 to 15.

30. A computer-readable storage medium, wherein the computer-readable storage medium stores a computer program, and when the computer program is run, the method according to any one of claims 1 to 8 or any one of claims 9 to 15 is implemented.
